(19) Europäisches Patentamt
European Patent Office
Office européen des brevets

(11) **EP 1 770 408 A1**

(12) **EUROPEAN PATENT APPLICATION**

(43) Date of publication:
04.04.2007 Bulletin 2007/14

(51) Int Cl.:
*G01S 7/28* (2006.01)    *G01S 13/10* (2006.01)

(21) Application number: 06121053.0

(22) Date of filing: 21.09.2006

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 22.09.2005 US 232615

(71) Applicant: M/A-COM, INC.
Lowell, MA 01854 (US)

(72) Inventor: Jenkins, Alan Peter
Groton, MA 01450 (US)

(74) Representative: Johnstone, Douglas Ian et al
Baron & Warren,
19 South End,
Kensington
London W8 5BU (GB)

(54) **Single side band radar**

(57)    A pulsed radar (10) that uses a single sideband pulsed signal for determining a distance to a target. The radar has twice the target resolution of a conventional pulsed radar using the same bandwidth signal. The single sideband pulsed signal within a transmitter (12) may be produced by mixing a base-band pulsed signal with a radio frequency (RF) carrier frequency and then filtering the resultant amplitude modulated signal to suppress either the upper or the lower sideband signal. Because only one sideband is used, the pulse occupies half the bandwidth that it would in a conventional pulsed radar. For a given bandwidth, the single sideband radar, therefore, has twice the target resolution of a conventional pulsed radar system. The single sideband signal's shape must, however, be preserved during amplification to avoid reintroduction of the suppressed sideband, so highly linear power amplifiers (42) must be used to boost the strength of the signal before transmission.

FIG. 4

**Description**

The present invention relates to pulsed radar systems and methods, and more particularly to pulsed radar systems and methods having an improved resolution-to-bandwidth ratio.

Pulsed radar systems are well-known systems used for detecting the range and velocities of targets.

In a conventional pulsed radar system, a radio frequency (RF) carrier signal is modulated with a series of square, base-band pulses to produce an output signal having the carrier frequency and two sidebands produced by the modulation. The output signal is amplified using a power amplifier and the resultant high power, RF signal is transmitted via a transmitting antenna. A receiving antenna captures any of the transmitted signal that is reflected back off a target. The reflected signal is down-converted to a base-band pulse, and the time and phase difference between the transmitted pulse and the reflected pulse is determined. As the transmitting and receiving antennae are typically combined, the time and phase difference can be used to determine the distance from the single antenna to the target. Frequency shifts of the return pulse can be used to determine the velocity of the target relative to the antenna.

In a simple, pulsed radar system, the accuracy of the antenna-to-target distance measurement (also known as the target resolution) is inversely proportional to the width of the transmitted pulse. In turn, the bandwidth of the output signal is inversely proportional to the width of the transmitted pulse, so that the target resolution of a pulsed radar system is directly proportional to the bandwidth of the radar. In particular, the narrower the pulses used, the more accurately the antenna-to-target distance can be measured, i.e., the higher the target resolution of the radar. The tradeoff for the higher resolution is, however, that the signal bandwidth must be proportionally larger, i.e., a proportionally larger amount of frequency spectrum must be used.

Traditionally, radars have been developed for government agencies such as the military or the civilian air traffic control, both of which enjoy considerable latitude in use of the radio spectrum, both in terms of bandwidth and power use.

Recently, there has been a significant amount of interest in developing and deploying radar for civilian applications such as automobile radar. In these uses of radar, the constraints on bandwidth and power are much more restrictive, leading to radar developers having new and different design constraints. In particular, there is a need for high resolution radar systems, apparatus and methods that maximize the use of limited bandwidth, and use minimal power to avoid interference with electronic devices.

According to an aspect of the present invention there is provided a method comprising the steps of combining a radio frequency carrier signal with a base-band, pulse signal, to generate a non-constant envelope, single-sideband signal. The single-sideband signal may then be used in determining a distance to a target.

According to a further aspect of the present invention there is provided a radar system comprising circuits for generating the radio frequency carrier signal, the base-band, pulse signal and for combining them to produce the non-constant envelope, single-sideband signal, as well as a circuit for determining the distance to a target using the single-sideband signal.

The invention will now be described by way of example with reference to the accompanying drawings in which:

FIG. 1 is a schematic drawing showing the main elements of an exemplary pulsed radar system;

FIG. 2A is a schematic drawing showing, in frequency space, a signal having two sidebands;

FIG. 2B is a schematic drawing showing the amplitude of the signal of FIG 2A as a function of time;

FIG. 3A is a schematic drawing showing, in frequency space, a signal having a single sideband in frequency space;

FIG. 3B is a schematic drawing showing the amplitude of the signal of FIG 3A as a function of time;

FIG. 4 is a schematic drawing showing a general form of the single sideband pulsed radar transmitter of the present invention;

FIG. 5 is a schematic drawing showing an implementation of the single side band pulsed radar transmitter of the present invention; and

FIG. 6 is a schematic drawing showing the single side band pulsed radar transmitter using a base-band Hilbert transform.

The present invention concerns systems, methods and apparatus for a radar system that makes efficient use of bandwidth and power by utilizing the technique of single sideband modulation. By using a single sideband signal, the radar of this invention has a target resolution that is twice the target resolution of a conventional radar operating with a signal having the same bandwidth.

In a preferred embodiment, the single-side band signal is produced by appropriate filtering of the carrier signal after mixing with the base band pulse signal. In particular, an appropriate base-band radar pulse signal is mixed with a radio frequency (RF) carrier signal, resulting in an amplitude modulated signal having the carrier frequency and a lower and an upper sideband signal. The lower sideband may then be suppressed to provide a single sideband signal that may be used in a radar application. In a preferred embodiment, the lower sideband is suppressed by an appropriate high-pass filter.

Because only one sideband is used in the single sideband radar pulse signal, a pulse of a given width only occupies half the bandwidth that an equivalent width pulse would occupy in a conventional pulsed radar application. For a given bandwidth use, the single sideband radar of this invention has, therefore, twice the target resolution of a conventional pulsed radar system.

The shape of the single sideband signal must, however, be preserved during any amplification to avoid reintroduction of the suppressed sideband. This requires that any power amplifiers used to boost the signal for transmission must be highly linear, or that the signal must be pre-distorted prior to amplification to compensate for any non-linearity in the power amplifiers.

These and other features of the invention will now be described in more detail with reference to the accompanying drawings in which, as far as possible, like numbers represent like elements.

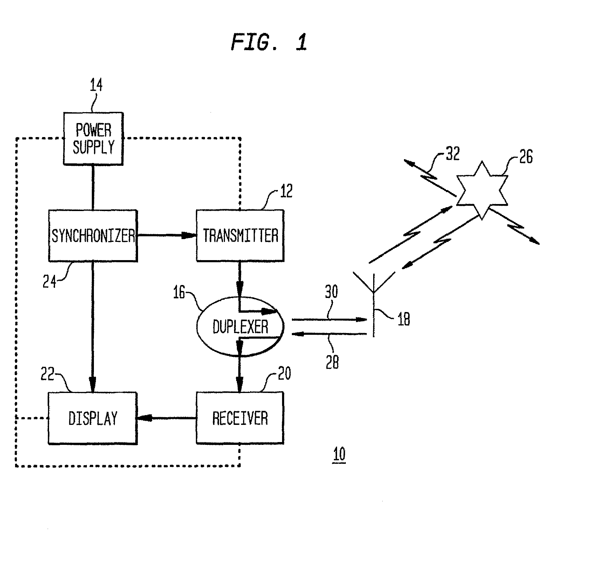

Figure 1 is a schematic drawing showing the main elements of an exemplary pulsed radar system 10 having a co-located or combined transmit and receive antenna. The radar system comprises a transmitter 12, a power supply 14, a duplexer 16, an antenna 18, a receiver 20, a display 22 and a synchronizer 24, and being used to send a pulse modulated RF signal 28 in the direction of a target 26. The radar system collects the fraction 30 of the reflected signal 32 as the return signal.

The transmitter 12 is a suitably high power radio frequency (RF) transmitter modulated at the appropriate pulse width for the pulsed radar.

The receiver 20 is a suitably sensitive RF receiver that can receive the small return signal 30 reflected off target 26.

The duplexer 16 is a device that allows radiation from the transmitter to be fed to the antenna but not to the receiver, and similarly for radiation from the antenna to be fed to the receiver but not to the transmitter.

The pulsed radar system operates by the transmitter 12, under the control of the synchronizer 24, sending a pulse modulated signal via the duplexer 16 out from antenna 18 in the direction of the target 26. Although most of the signal reflected from the target 26 is directed into signals 32 that do not return to the transmitting antenna 18, a small portion of the transmitted signal 28 is returned to the antenna 18 as the return signal 30. The return signal 30 is detected by being fed via the duplexer 16 to the receiver 20 and on to the display 22. In the exemplary system of figure 1, the display is controlled by the synchronizer 24, allowing the display 22 or suitable electronic circuitry associated with it, to measure time and frequency differences between the transmitted signal and received signal and to make target range and velocity measurements.

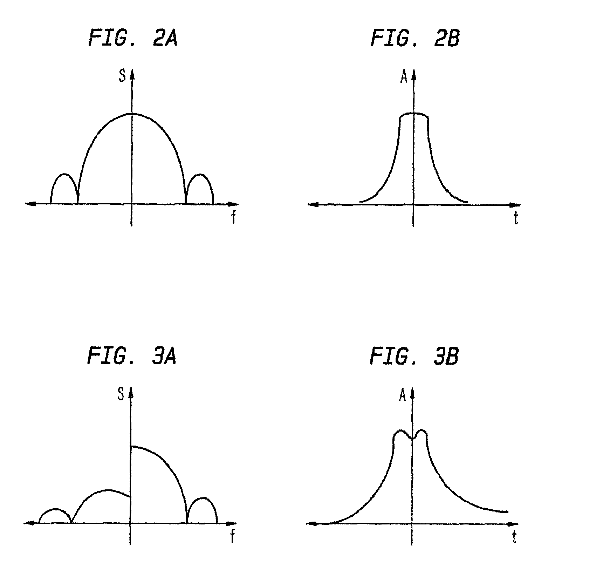

Figure 2A is a schematic drawing showing, in frequency space, a signal having two sidebands. The strength S of the signal is plotted logarithmically in dB against frequency.

Figure 2B is a schematic drawing showing the amplitude of the double sideband signal of figure 2A plotted linearly as a function of time. The signal is symmetrical, and is essentially a constant envelope signal so that any distortions in the power amplifier have a minimal effect on the signal.

Figure 3A is a schematic drawing showing, in frequency space, a signal having a single sideband. The strength S of the signal is plotted logarithmically in dB against frequency.

Figure 3B is a schematic drawing showing the amplitude of the single sideband signal of figure 3A plotted linearly as a function of time. The signal is asymmetrical and has an amplitude shape structure (also known as magnitude ripple) that needs to be maintained in order to preserve the single sideband characteristic of the signal, i.e., it is important that an amplified signal is congruent with the original single sideband signal. Amplification of the single sideband signal by a non-linear amplifier will distort the shape of the signal and grow back the suppressed sideband.

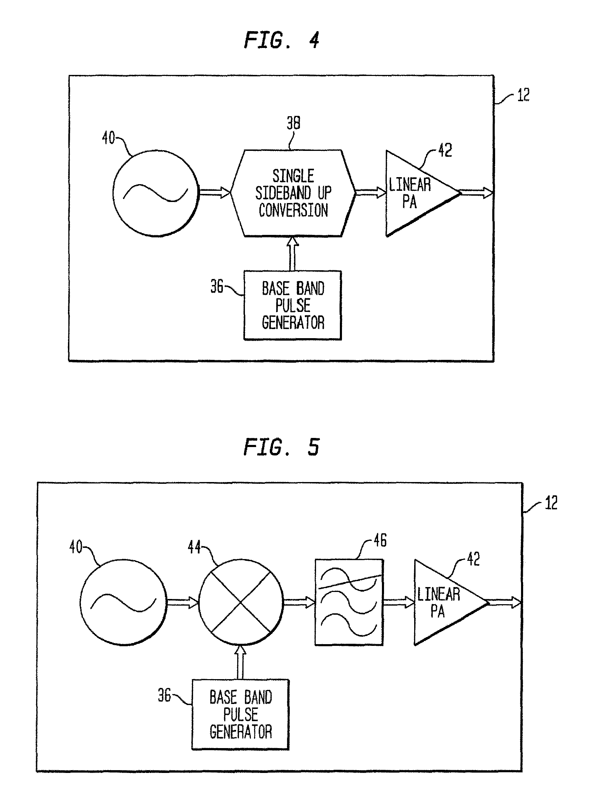

Figure 4 is a schematic drawing showing a general form of the single side band pulsed radar transmitter of the present invention. The transmitter 12 comprises a base-band pulse generator 36, a single sideband up converter 38, a carrier frequency generator 40 and a linear amplifier 42.

The base-band pulse generator 36 produces a signal that is a series of essentially rectangular pulses. The single sideband up converter 38 mixes the base-band pulse signal with a sinusoidal RF carrier frequency signal from the carrier frequency generator 40 to produce a single sideband signal, as shown in figure 3A, and having an asymmetrical modulation envelope of the form shown in figure 3B. The single side band signal is then amplified by a linear power amplifier 42 and fed to the radar antenna 18. As discussed above, because the single side band signal is not a constant envelope signal, it is important that power amplifier 42 be linear so that the amplitude information of the waveform is preserved and there is no re-growing of the spectral content of the waveform.

Figure 5 is a schematic drawing showing an implementation of a single sideband pulsed radar transmitter in accordance with the present invention. The transmitter 12 comprises a base-band pulse generator 36, a carrier frequency generator 40, a mixer 44, a high-pass filter 46 and a linear amplifier 42. The mixer 44 mixes the base-band pulse signal with a sinusoidal carrier frequency signal from the carrier frequency generator 40 to produce a signal having two sidebands, as shown in figure 2A, and a symmetrical modulation envelope of the form shown in figure 2B. This double sideband signal is then fed through a high-pass filter 46 to suppress the lower sideband and produce a single sideband signal, as shown in figure 3A, and having an asymmetrical modulation envelope of the form shown in figure 3B. The single sideband signal is then amplified by a linear power amplifier 42 and fed to the radar antenna 18.

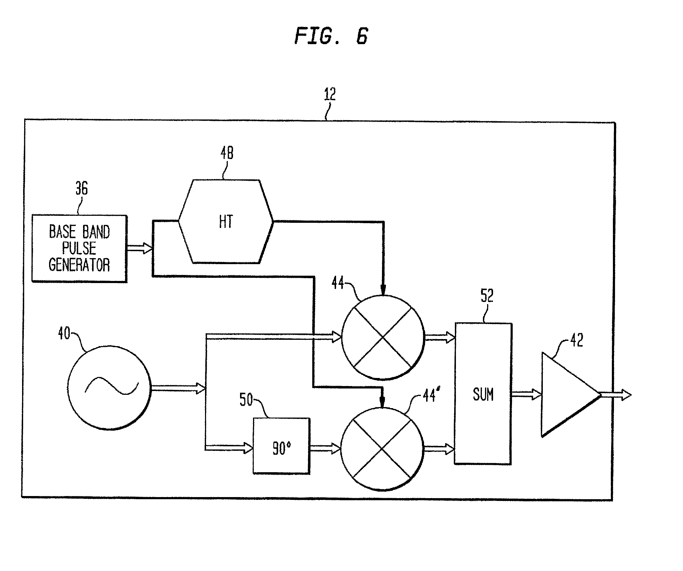

Figure 6 is a schematic drawing showing the single sideband pulsed radar transmitter in accordance with an alternative embodiment of the invention using a base-band Hilbert transform. The transmitter 12 comprises a base-band pulse generator 36, a carrier frequency generator 40, a Hilbert Transform module 48, a 90 degree phase shifter 50, two mixers 44, 44', a summation module 52, and a linear power amplifier 42.

A signal from the base-band pulse generator is split into two, with one copy of the signal being fed through the Hilbert transform module 48 to a first mixer 44 while the other part of the signal is fed directly to the second mixer 44'. The carrier signal from the carrier frequency generator 40 is similarly split in two with one copy fed to the first mixer 44 and the second copy phase shifted by 90 degrees before being fed to the second mixer 44'. The first mixer 44 mixes the Hilbert transformed base-band pulse signal with a carrier signal, while the second mixer 44' mixes the base-band pulse signal with a 90 degree phase shifted carrier signal. The outputs of the two mixers 44, 44' are summed to form a single side band signal which is fed to the linear power amplifier 42.

The Hilbert transform module may be, but is not limited to, any suitably programmed general purpose digital signal processing circuit, or a hardware implementation of the processing steps of such programming.

The Hilbert transform circuit of figure 6 performs a task that is similar in principle to quadrature up-conversion, in which two mixers are driven with sine and cosine local oscillators (LOs), which are internally derived from a single-ended high-quality oscillator. The mixers are also fed sine and cosine base-band signals to be up-converted symmetrically about the fixed LO. The two mixer outputs are summed to add in-phase components and reject quadrature components. The end result is a suppressed-carrier, single-sideband, voltage output at a frequency that is either the sum or difference of the LO and baseband signal, plus suppressed remnants of the LO and opposing sideband.

Such a system can be thought of in terms of the double angled sine formula in reverse, i.e.,

$$\sin A\cos B + \cos A\sin B = \sin(A+B)$$

where sinA represents the carrier frequency, cosA represents the carrier frequency phase shifted by 90 degrees, sinB represents one component of the pulse signal, and cosB represents that component phase shifted by 90 degrees. The single output, sin(A+B) represents the single side band, carrier suppressed output signal.

As the Hilbert transform of a real signal is a complex signal in which the real part is the original signal and the imaginary part is a 90 degree phase shifted version of the original signal, an alternative way to implement quadrature up-conversion is to Hilbert transform both the base-band pulse generator signal and the carrier signal. The real part from one Hilbert transform is then mixed with the imaginary part of the other Hilbert transform, and vice versa, and the output of the two mixers summed, with the result being a single sideband output signal.

In a further embodiment of the invention, a power amplifier having some distortion may be used, so as to maximize the efficiency of the system. In this case, the single sideband signal is pre-distorted so that, after amplification by the non-linear amplifier, the signal maintains the single side band, and there is no re-growing of the spectral content of the waveform. This requires that the power amplifier has distortion characteristics that are complementary to the pre-distortion of the single sideband signal, so that the amplified signal has an amplitude shape that is congruent with the original, single sideband signal. The pre-distortion of the signal may be done by, but is not limited to, a suitably programmed general purpose digital signal processing circuit, or a hardware implementation of the processing steps of such programming.

Although the invention has been described in language specific to structural features and/or methodological acts, it is to be understood that the invention defined in the appended claims is not necessarily limited to the specific features or acts described. Rather, the specific features and acts are disclosed as exemplary forms of implementing the claimed invention.

## Claims

1.  A radar system, comprising:

    a circuit (40) for generating a radio frequency carrier signal;
    a circuit (36) for generating a base-band, pulse signal;
    a circuit (38) for combining said carrier signal and said pulse signal to produce a non-constant envelope, single-sideband signal; and
    a circuit for determining a distance to a target (26) using said single-sideband signal.

2.  The radar system of claim 1 wherein said circuit for determining a distance to said target (26) further comprises:

    at least one antenna (18) for transmitting said single sideband signal and for receiving said single sideband signal after reflection off a target (26); and
    a circuit for measuring a time delay between said transmitted signal and said detected signal, said time delay being indicative of a distance to said target.

3.  The radar system of claim 1 wherein said circuit (38) for combining said carrier signal and said pulse signal comprises a mixer (44) and a high pass filter (46).

4.  The radar system of claim 1 wherein said circuit (38) for combining said carrier signal and said pulse signal comprises:

    a Hilbert transform circuit (48) for transforming said pulse signal to provide a first transformed signal;
a phase shifter (50) for transforming said carrier signal to provide a second transformed signal;
a first mixer (44) for mixing said first transformed signal with said carrier signal to provide a first mixed signal;
a second mixer (44') for mixing said second transformed signal with said pulse signal to provide a second mixed signal; and
a summation (52) circuit for summing said first and second signal to provide said single-sideband signal.

5. The system of claim 1 further comprising a linear amplifier (42) for amplifying said single sideband signal, thereby preserving the amplitude shape of said single sideband signal.

6. The system of claim 1 further comprising a power amplifier (42) and a pre-distortion circuit for pre-distorting said single sideband signal prior to amplification by said power amplifier, thereby providing an amplified signal having an amplitude shape congruent with said single-sideband signal.

7. A radar method, comprising the steps of:

combining a radio frequency carrier signal with a base-band, pulse signal, to generate a non-constant envelope, single-sideband signal; and determining a distance to a target using said single-sideband signal.

8. The method of claim 7 wherein said step of combining comprises the steps of mixing said radio frequency carrier signal and said base-band, pulsed signal to provide an amplitude modulated signal having said carrier frequency and a lower and an upper sideband signal; and suppressing one of said sidebands of said amplitude signal using a high-pass filter.

9. The method of claim 8 wherein said step of combining comprises:

Hilbert transforming said pulse signal to provide a first transformed signal; transforming via phase shifting said carrier signal to provide a second transformed signal; mixing said first transformed signal with said carrier signal to provide a first mixed signal; mixing said second transformed signal with said pulse signal to provide a second mixed signal; and summing said first and second signal to provide said single-sideband signal.

## FIG. 1

FIG. 2A

FIG. 2B

FIG. 3A

FIG. 3B

## FIG. 4

SINGLE SIDEBAND UP CONVERSION

38

40

42

LINEAR PA

36 — BASE BAND PULSE GENERATOR

12

## FIG. 5

40

44

46

42

LINEAR PA

36 — BASE BAND PULSE GENERATOR

12

# FIG. 6

**European Patent Office**

## EUROPEAN SEARCH REPORT

Application Number

EP 06 12 1053

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 825 800 B1 (DUDLEY PETER A [US] ET AL) 30 November 2004 (2004-11-30) * abstract; figures 1-7,9-12 * * column 1 - column 12 * ----- | 1-9 | INV. G01S7/28 G01S13/10 |
| X | FOLTZ T M ET AL: "A digital single sideband modulator for a digital radio frequency memory" AEROSPACE AND ELECTRONICS CONFERENCE, 1989. NAECON 1989., PROCEEDINGS OF THE IEEE 1989 NATIONAL, 22 May 1989 (1989-05-22), pages 926-932, XP010086622 * abstract; figure 1 * * paragraph [0002] * ----- | 1-9 | |
| X | US 2005/174279 A1 (VOIGTLAENDER KLAUS [DE]) 11 August 2005 (2005-08-11) | 1-3,7,8 | |
| A | * the whole document * ----- | 4-6,9 | |
|  |  |  | TECHNICAL FIELDS SEARCHED (IPC) |
|  |  |  | G01S |

The present search report has been drawn up for all claims

| Place of search | Date of completion of the search | Examiner |
|---|---|---|
| Munich | 4 December 2006 | LOPEZ DE VALLE, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 12 1053

This annex lists the patent family members relating to the patent documents cited in the above-mentioned European search report.
The members are as contained in the European Patent Office EDP file on
The European Patent Office is in no way liable for these particulars which are merely given for the purpose of information.

04-12-2006

| Patent document cited in search report | | Publication date | Patent family member(s) | | Publication date |
|---|---|---|---|---|---|
| US 6825800 | B1 | 30-11-2004 | NONE | | |
| US 2005174279 | A1 | 11-08-2005 | WO | 2004023157 A1 | 18-03-2004 |
| | | | DE | 10240497 A1 | 11-03-2004 |
| | | | EP | 1537436 A1 | 08-06-2005 |
| | | | JP | 2005537485 T | 08-12-2005 |

For more details about this annex : see Official Journal of the European Patent Office, No. 12/82